# EUROPEAN PATENT SPECIFICATION

(11) **EP 3 812 214 B1**
(45) Date of publication and mention of the grant of the patent: **05.10.2022**
(21) Application number: 20203769.3
(22) Date of filing: 26.10.2020
(51) Int. Cl.: B60R 11/00

(54) **COMMERCIAL VEHICLE WITH HOLDING SYSTEM FOR ELECTRONIC DEVICES**
NUTZFAHRZEUG MIT HALTESYSTEM FÜR ELEKTRONISCHE GERÄTE
VÉHICULE COMMERCIAL AVEC SYSTÈME DE MAINTIEN POUR APPAREILS ÉLECTRONIQUES

(30) Priority: 24.10.2019 IT 201900003822 U
(43) Date of publication of application: 28.04.2021
(73) Proprietor: CNH Industrial Italia S.p.A., 10135 Torino (IT)
(72) Inventor: Schmutzer, Markus, 3373 Kemmelbach (AT)
(74) Representative: CNH Industrial IP Department

(56) References cited:
- WO-A1-2014/186870
- FR-A1- 2 895 713
- US-A1- 2004 084 920
- US-A1- 2011 068 241
- US-A1- 2018 178 648

## Description

### TECHNICAL FIELD

The present innovation concerns a holding system for a work vehicle, in particular a holding system carried by an inner portion of an agricultural vehicle, such as a wall of a cabin.

### BACKGROUND OF THE INNOVATION

Operators of work vehicle, especially agricultural vehicles, must stay in the cabin of the work vehicle for many hours during the day. Accordingly, ergonomics of the cab and of any facilities housed inside this latter are always an important factor.

A crucial aspect related to ergonomics is related to the use of different electric devices, such as telephones, tablet, or command screens. It is known to carry such electric devices in a fixed position on a bar carried by the wall of the cabin and positioned in front of a windscreen of the cabin.

However, during the working day such fixation point may not be located at the most current ergonomic position for the user. Indeed, such aspect is even more felt when the operator is performing a working operation and these latter cannot move excessively because he needs to monitor such operation. US20180178648 is directed to a slidable mounting assembly for a work vehicle including a mounting bracket configured to couple to a frame member of the work vehicle, and a rail coupled to the mounting bracket , according to the preamble of claim 1

Therefore, the need is felt to improve the ergonomics inside work vehicle cab for agricultural vehicle, especially with regard to positioning of electric devices.

An aim of the present innovation is to satisfy the above mentioned needs in a cost effective and compact way.

### SUMMARY OF THE INNOVATION

The aforementioned aim is reached by a work vehicle comprising a holding system as claimed in the appended set of claims.

### BRIEF DESCRIPTION OF DRAWINGS

For a better understanding of the present innovation, a preferred embodiment is described in the following, by way of a non-limiting example, with reference to the attached drawings wherein:
- Figure 1 is a front schematic view of a tractor comprising a holding system according to the present innovation;
- Figure 2 is a front perspective view of an inner portion of the cabin of the tractor of figure 1 according to a first embodiment of the present innovation;
- Figure 3 is a rear perspective view of an inner portion of the cabin of the tractor of figure 1 according to a first embodiment of the present innovation;
- Figure 4 is a front perspective view of an inner portion of the cabin of the tractor of figure 1 according to a second embodiment of the present innovation; and
- Figure 5 is a rear perspective view of an inner portion of the cabin of the tractor of figure 1 according to a second embodiment of the present innovation.

### DETAILED DESCRIPTION OF THE INNOVATION

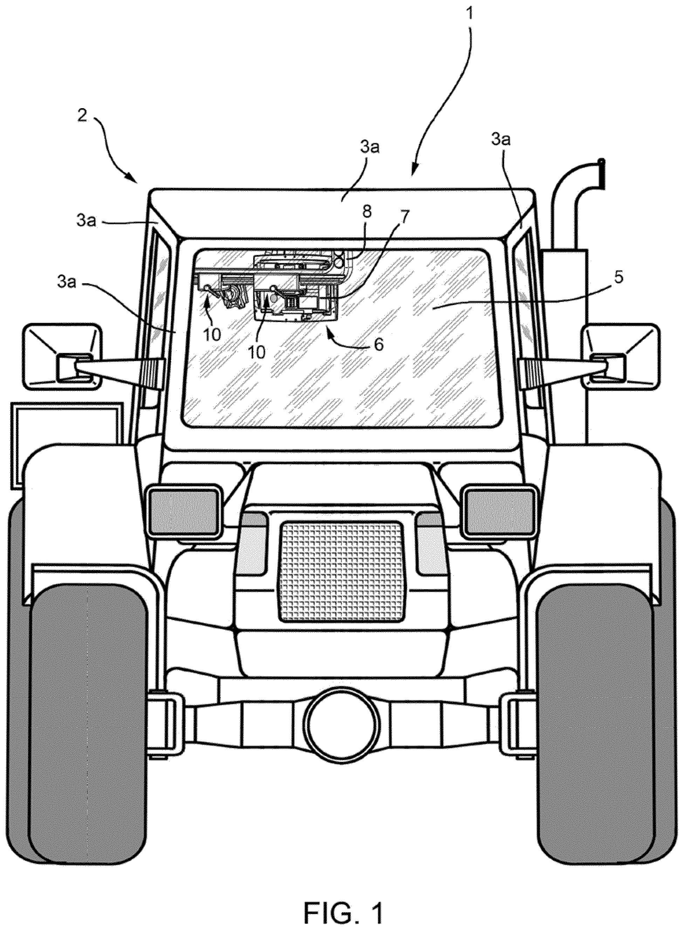

Figure 1 discloses an agricultural vehicle 1 of known typology, e.g. a tractor, comprising a cabin 2 including a plurality of walls 3 connected together to define an inner space 4 in which a seat for the user of the vehicle 1 is placed.

In greater detail, the cabin 2 is defined by a plurality of lateral walls 3a, i.e. a right, a left, a rear and a front lateral wall, a roof 3b and a floor (not shown). As known, the right and left lateral walls 3a are provided with openings to install windows while front wall 3a is provided with an opening which occupies almost the entire front wall 3a to house a windscreen 5. It is clear that the described cabin arrangement is exemplarily and the front wall 3a may be absent and occupied entirely by a windscreen 5 fixed to the other walls 3a defining the cabin.

According to the present innovation, the vehicle 1 comprises a holding system 6 carried by at least one of the walls 3 defining the cabin 2 and defining a plurality of holding positions along itself for electronic devices such as telephones, tablets, or command screens 7.

In greater particular, the holding system 6 comprises a support arm 8 comprising a first extremity portion 8a configured to be fixed to the wall 3 of the cabin 2 and a second extremity portion 8b configured to be fixed to such wall 3 or to another wall 3 of the cabin 2.

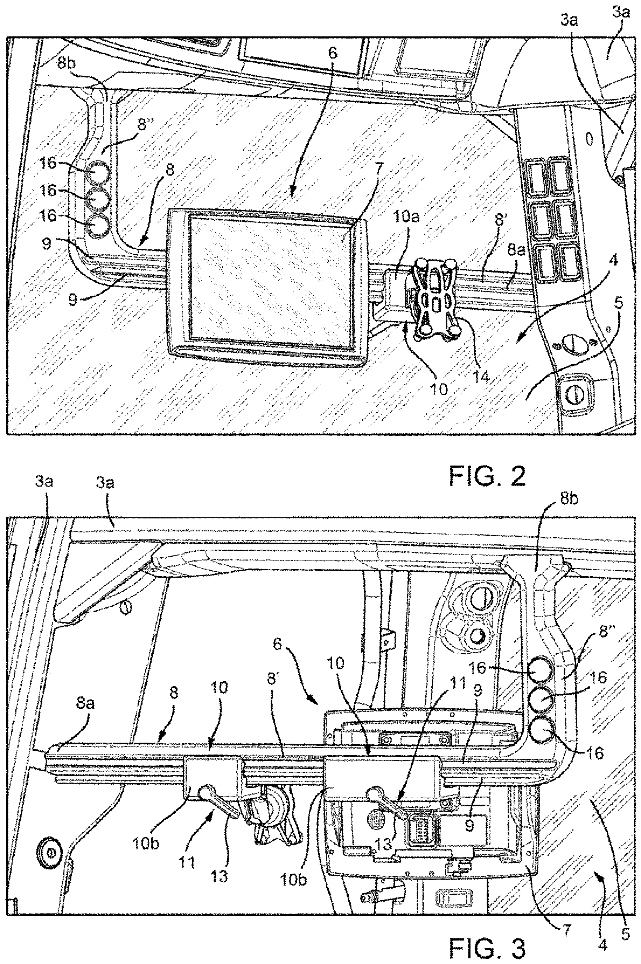

According to the invention as described in the embodiments of figures 2 to 5, the support arm 8 is L-shaped, i.e. comprises a first segment 8' parallel to the ground and a second segment 8", perpendicular to the first segment 8'. The first segment 8' defines the first extremity portion 8a which is fixed to a lateral wall 3a of the cabin 2 while the second segment 8" defines a second extremity portion 8b which is fixed to a lateral wall 3b of the cabin 2.

Advantageously, the support arm 8 is realized as one piece and in polymeric material, such as in plastic.

According to an aspect of the present innovation, the holding system 6 is provided with a holding element configured to be selectively fixed along said support arm 8 in order to define a plurality of fixation position for said electronic devices.

In particular, the support arm 8 is provided with grooves 9 configured to define a path along the support arm 8 itself and the holding element 10 is configured to slide within such grooves 9 along the path defined along the support arm 8.

According to the described embodiments of figures 2 to 5, the grooves 9 are realized in the first segment 8' along the entire length of this latter and are substantially parallel to ground once the system 6 is mounted on the vehicle. Moreover, the grooves 9 are preferably two grooves 9, i.e. an upper groove 9 and a lower groove 9 for each face of the first segment 8', i.e. there are two grooves 9 directed towards the inner space 4 and two grooves faced to windscreen 6.

The two pairs of grooves 9 are at the same vertical position with respect to first segment 8', thereby defining a sort of rail along this latter. The holding element 10 is configured to slide along such rail defined by the two pairs of grooves 9 and comprises coupling means 11 configured to selectively fix the holding element 10 on a chosen position along the first segment 8.

In particular, on both the described embodiments the holding element 10 comprises a front and a rear portions 10a, 10b, the front portion 10a being shaped to cooperate with front grooves 9 and the rear portion 10b being shaped to cooperate with rear grooves 9. The front and the rear portions 10a, 10b are coupled together by a pin 12 which allows a relative movement of portions 10a, 10b along a longitudinal axis of such pin 12. Accordingly, portions 10a, 10b may be faced one with respect to the other at a predefined distance or may be in direct contact one with the other, according to their relative position along pin 12.

According to the above described arrangement, the coupling means 11 comprises a handle 13 coupled to pin 12 and configured to regulate the distance between portions 10a, 10b from a contact position, i.e. a minimum distance position, and a maximum distance position. The handle 13 can be coupled to pin 12 to produce the above effect thanks to any known mechanical means, e.g. via threaded means or springs.

According to the above, the holding element 10 may be designed so that the maximum distance between portions 10a, 10b is provided to allow the extraction of these latter from grooves 9 and the minimum distance is provided to allow the fixing of the holding element 10 because of the friction engagement of portions 10a, 10b due to their compressive action on first segment 8'.

As clearly shown in the embodiments of figure 2, 3 and 4, 5 the holding element 10 may be coupled to grooves 9 so that they protrude above the first segment 8' or below this latter, according the necessity of the user and the typology of electronic devices that it is needed to be carried.

It is clear that two holding elements 10 are shown, but it is clear that the holding system 6 may also carry only a only one or more than two holding elements 10.

According to the described embodiments of figures 2 to 5, the holding element 10 is provided with a support plate 14 configured to allow the fixation of the electronic device 7. Preferably, such support plate 14 is carried by one of the portions 10a, 10b in a movable manner so as to allow a position regulation of the electronic device 10.

According to the above arrangement the support plate 14 is supported by pin 12 and, advantageously, via a ball joint realized between the support plate 14 and a terminal ball portion 15 of the pin 12 so that the support plate 14 can be easily positioned around the axis of pin 12.

According to the first embodiment of the present innovation, shown in figures 2 and 3, the support arm 8 is preferably hollow and it is dimensioned to allow the passage of electrical or signal cables inside itself. Accordingly, the support arm 8 is provided with at least a socket 16 configured to allow such cables to come out from the volume defined by the support arm 8 to be connected to an electronic device and provide to this latter power and/or communication signals. Such cables, obviously, are connected to a source of electrical power and/or of communications signals of the vehicle 1.

In particular, according to the described embodiment, the support arm 8 defines such socket 6 realized in the second segment 8". Preferably, the support arm 8 defines three sockets 6 on both its rear and front face. Preferably, the three sockets 6 on the rear face are aligned along the second segment 8" and, similarly the three sockets 6 on the front face are aligned along the second segment 8". Preferably, sockets 6 on front face are coaxial with sockets 6 realized on rear face of the support arm 8.

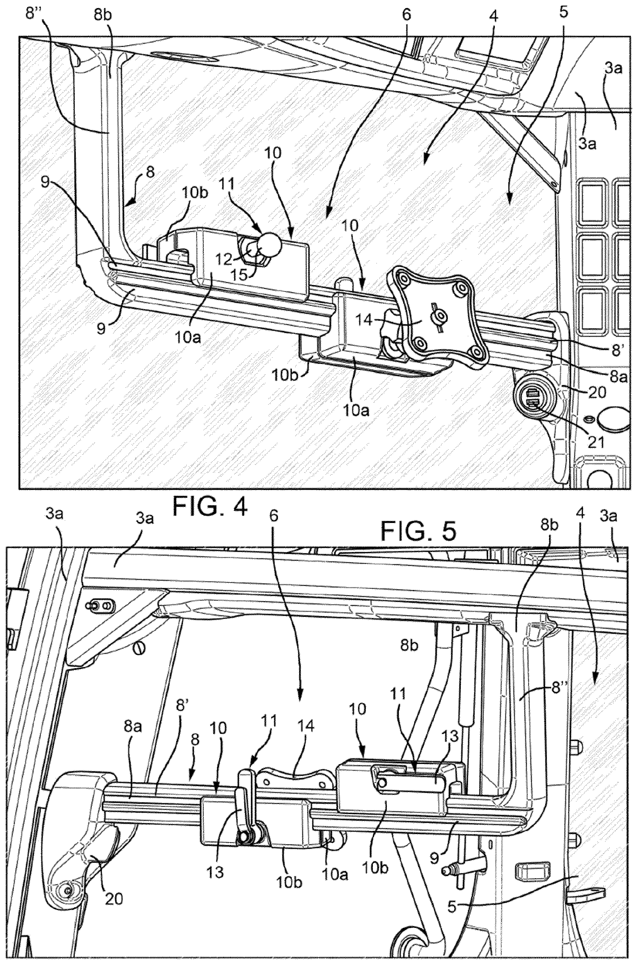

According to the second embodiment of the present innovation, shown in figures 4 and 5, the support arm 8 comprises a fixed holding element 20 configured to be carried by support arm 8 and to be fixed to one of the walls 3 of the cabin 2.

In the described embodiment, such fixed holding element 20 is carried by first segment 8' and fixed to lateral wall 3a of the cabin 2.

Such fixed holding element 20 is configured to carry electric connection means 21, such one or more USB ports, in order to allow the electrical/signal communication of the electronic devices 7 with a source of electrical power or to a source of communication signals.

Furthermore, as shown in such second embodiment, the holding elements 10 may be fixed on opposite positions according to a plan defined by the longitudinal axis of first portion 8' of support arm 8, according to user's necessities.

The operation of an agricultural vehicle 1 provided with a holding system 6 as described above is the following.

The user of the vehicle can couple or decouple to the support plate 14 any kind of electronic device 7. When coupled, the user may decouple portions 10a, 10b of holding element 10 to allow the sliding of this latter along the support arm 8 and may move support plate 14 to regulate the inclination along an axis perpendicular to the aforementioned sliding path. Once the required position is reached, the user can fix the holding element 10 thanks to the coupling means 11 so that the holding element 10 cannot move during the working operations of the vehicle.

In view of the foregoing, the advantages of a work vehicle 1 provided with a holding system 6 according to the innovation are apparent.

Thanks to the proposed holding system 6 the user can fix electronic devices 7 in different points according to its best comfort position.

Furthermore, the proposed system is particularly inexpensive and versatile. Indeed, the realization with a "L-shape" allows the fixation of the support arm 8 at left or right side of the vehicle 1 without requiring any further modification to the holding system.

Again, the holding elements 10 are easy to fix and move along the support arm 8, thereby guaranteeing a quick setting of the disposition of electronic devices according to the comfort of the user.

Furthermore, the two different possibilities for providing power and/or signals allow the use of the holding system with different typologies of vehicles 1.

It is clear that modifications can be made to the described work vehicle 1 provided with a holding system 6 which do not extend beyond the scope of protection defined by the claims.

For example, the shapes of support arm 8, holding element 10 or supporting plate 15 may be varied according to the typology and dimensions of the vehicle.

Furthermore, it is clear that coupling means 10, the fixing points of support arm 8 or the ball joint 13 may be substituted by equivalent devices.

## Claims

1. Work vehicle (1) including a cabin (2) defined by a plurality of walls (3) and a windscreen (5) delimiting an inner space (4) configured to accommodate a user of said work vehicle (1), said work vehicle (1) comprising a holding system (6) carried by at least one of said walls (3) inside said inner space (4) in face of said windscreen (5), said holding system (6) being configured to define a plurality of holding positions for electronic devices (7) to be used by said user, wherein said holding system (6) comprises a support arm (8) comprising at least an extremity portion (8a, 8b) configured to allow the fixation of said support arm (8) to one of said walls (3) and at least a holding element (10), each configured to be selectively fixed along said support arm (8) and to define a support for an electronic device (7) **characterised in that** said support arm (8) is L-shaped and comprises a first portion (8') parallel to ground and a second portion (8") perpendicular to said first portion (8'), said first portion (8') comprising a first extremity portion (8a) configured to be fixed to a first wall (3a) of said cabin (2) and said second portion (8") comprising a second extremity portion (8b) configured to be fixed to a second wall (3b) of said cabin (2) .

2. Work vehicle according to claim 1, wherein said support arm (8) defines at least two grooves (9) defining a path along said support arm (8), said holding element (10) being configured to slide within said grooves (9) along said path.

3. Work vehicle according to claims 1 and 2, wherein said grooves (9) are realized in said first extremity portion (8a) .

4. Work vehicle according to any of claim 1 to 3, wherein said support arm (8) is hollow and configured to allow the passage of cables within itself, said cables being connected to a source of power and/or signal of said work vehicle (1) to provide power and/or signal to said electronic devices (7).

5. Work vehicle according to claim 4, wherein said support arm (8) comprises sockets (16) configured to allow the passage of said cables from the inner space defined by said support arm (8) to said inner space (4) defined by said cabin (2) .

6. Work vehicle according to any of claims 1 to 3, comprising a fixed holding element (20) carried by said support arm (8) and/or one of said walls (3) and configured to carry electrical connection means (21) connected to a source of power and/or signal of said work vehicle (1) to provide power and/or signal to said electronic devices (7).

7. Work vehicle according to any of claims 1 to 6, wherein said holding element (10) comprises a support plate (14) configured to allow the connection of an electronic device (7).

8. Work vehicle according to any of claims 1 to 7, wherein said holding element (10) comprises a first portion (10a) configured to cooperate with a side of said support arm (8) and a second portion (10b) configured to cooperate with an opposite side of said support arm (8), said first and second portions (10a, 10b) being connected together by a pin (12), said holding element (10) further comprising coupling means (11) configured to move away said first and second portions (10a, 10b) along said pin (12) and to clamp together said first and second portions (10a, 10b) to said support arm, moving these latter along said pin (12).

9. Work vehicle according to claim 7 and 8, wherein said support plate (14) is coupled to said pin (12) via a ball joint (15).

## Patentansprüche

1. Nutzfahrzeug (1) umfassend eine Kabine (2), die durch eine Mehrzahl von Wänden (3) und eine Windschutzscheibe (5) definiert ist, die einen Innenraum (4) abgrenzen, der dazu eingerichtet ist, einen Bediener des Nutzfahrzeuges (1) aufzunehmen, wobei das Nutzfahrzeug (1) ein Haltesystem (6) umfasst, welches von mindestens einer der Wände (3) innerhalb des Innenraums (4) vor der Windschutzscheibe (5) getragen wird, wobei das Haltesystem (6) dazu eingerichtet ist, eine Mehrzahl von Haltepositionen für elektrische Geräte (7) zu definieren, die von dem Bediener zu verwenden sind, wobei das Haltesystem (6) einen Tragarm (8), der mindestens einen Endabschnitt (8a, 8b) aufweist, der dazu eingerichtet ist, eine Befestigung des Tragarmes (8) an einer der Wände (3) zu ermöglichen, und mindestens ein Halteelement (10) umfasst, das jeweils dazu eingerichtet ist, wahlweise entlang des Tragarmes (8) befestigt zu werden und eine Stütze für ein elektrisches Gerät (7) zu definieren,
**dadurch gekennzeichnet, dass**
der Tragarm (8) L-förmig ist und einen ersten Abschnitt (8') parallel zum Boden und einen zweiten Abschnitt (8") senkrecht zum ersten Abschnitt (8') umfasst, wobei der erste Abschnitt (8') einen ersten Endabschnitt (8a) umfasst, der dazu eingerichtet ist, an einer ersten Wand (3a) der Kabine (2) befestigt zu werden, und der zweite Abschnitt (8") einen zweiten Endabschnitt (8b) umfasst, der dazu eingerichtet ist, an einer zweiten Wand (3b) der Kabine (2) befestigt zu werden.

2. Nutzfahrzeug nach Anspruch 1, wobei der Tragarm (8) zumindest zwei Nuten (9) definiert, welche einen Pfad entlang des Tragarmes (8) definieren, wobei das Halteelement (10) dazu eingerichtet ist, innerhalb der Nuten (9) entlang des Pfades zu gleiten.

3. Nutzfahrzeug nach Anspruch 1 und 2, wobei die Nuten (9) in dem ersten Endabschnitt (8a) ausgeführt sind.

4. Nutzfahrzeug nach einem der Ansprüche 1 bis 3, wobei der Tragarm (8) hohl ist und dazu eingerichtet ist, die Durchführung von Kabeln in sich selbst zu ermöglichen, wobei die Kabel mit einer Energiequelle und/oder Signalquelle des Nutzfahrzeuges (1) verbunden sind, um die elektrischen Geräte (7) mit Energie und/oder Signalen zu versorgen.

5. Nutzfahrzeug nach Anspruch 4, wobei der Tragarm (8) Steckerbuchsen (16) aufweist, die dazu eingerichtet sind, eine Durchführung der Kabel von dem durch den Tragarm (8) definierten Innerraum zum durch die Kabine (2) definierten Innenraum (4) zu ermöglichen.

6. Nutzfahrzeug nach einem der Ansprüche 1 bis 3, aufweisend ein festes Halteelement (20), welches von dem Tragarm (8) und/oder einer der Wände (3) getragen wird und dazu eingerichtet ist, elektrische Verbindungsmittel (21) zu tragen, die mit einer Energiequelle und/oder Signalquelle des Nutzfahrzeuges (1) verbunden sind, um die elektrischen Geräte (7) mit Energie und/oder Signalen zu versorgen.

7. Nutzfahrzeug nach einem der Ansprüche 1 bis 6, wobei das Halteelement (10) eine Stützplatte (14) umfasst, die dazu eingerichtet ist, eine Verbindung eines elektrischen Gerätes (7) zu ermöglichen.

8. Nutzfahrzeug nach einem der Ansprüche 1 bis 7, wobei das Halteelement (10) einen ersten Abschnitt (10a), der dazu eingerichtet ist, mit einer Seite des Tragarmes (8) zusammenzuwirken, und einen zweiten Abschnitt (10b) aufweist, der dazu eingerichtet ist, mit einer gegenüberliegenden Seite des Tragarmes (8) zusammenzuwirken, wobei der erste und zweite Abschnitt (10a, 10b) durch einen Stift (12) miteinander verbunden sind, wobei das Halteelement (10) ferner ein Kopplungsmittel (11) aufweist, das dazu eingerichtet ist, den ersten und zweiten Abschnitt (10a, 10b) entlang des Stiftes (12) auseinander zu bewegen und den ersten und zweiten Abschnitt (10a, 10b) an den Tragarm zusammen zu klemmen, wobei die letzteren entlang des Stiftes (12) bewegt werden.

9. Nutzfahrzeug (1) nach Ansprüchen 7 und 8, wobei die Stützplatte (14) mittels eines Kugelgelenks (15) mit dem Stift (12) verbunden ist.

## Revendications

1. Véhicule de travail (1) comprenant une cabine (2) définie par une pluralité de parois (3) et un pare-brise (5) délimitant un espace intérieur (4) configuré pour accueillir un utilisateur dudit véhicule de travail (1), ledit véhicule de travail (1) comprenant un système de support (6) porté par au moins une desdites parois (3) dans ledit espace intérieur (4) en face dudit pare-brise (5), ledit système de support (6) étant configuré pour définir une pluralité de positions de support pour les dispositifs électroniques (7) à être utilisés par ledit utilisateur, dans lequel ledit système de support (6) comprend un bras de support (8) comprenant au moins une partie d'extrémité (8a, 8b) configurée pour permettre la fixation dudit bras de support (8) à l'une desdites parois (3) et au moins un élément de support (10), chacun configuré pour être fixé sélectivement le long dudit bras de support (8) et pour définir un support pour un dispositif électronique (7)
**caractérisé en ce que**
ledit bras de support (8) est en forme de L et comprend une première partie (8') parallèle au sol et une seconde partie (8") perpendiculaire à ladite première partie (8'), ladite première partie (8') comprenant une première partie d'extrémité (8a) configurée pour être fixée à une première paroi (3a) de ladite cabine (2) et ladite seconde partie (8") comprenant une seconde partie d'extrémité (8b) configurée pour être fixée à une seconde paroi (3b) de ladite cabine (2).

2. Véhicule de travail selon la revendication 1, dans lequel ledit bras de support (8) définit au moins deux rainures (9) définissant une trajectoire le long dudit bras de support (8), ledit élément de support (10) étant configuré pour glisser dans lesdites rainures (9) le long de ladite trajectoire.

3. Véhicule de travail selon les revendications 1 et 2, dans lequel lesdites rainures (9) sont réalisées dans ladite première partie d'extrémité (8a).

4. Véhicule de travail selon l'une quelconque des revendications 1 à 3, dans lequel ledit bras de support (8) est creux et configuré pour permettre le passage de câbles dans son intérieur, lesdits câbles étant connectés à une source d'énergie et/ou à un signal dudit véhicule de travail (1) pour fournir de l'énergie et/ou un signal auxdits dispositifs électroniques (7).

5. Véhicule de travail selon la revendication 4, dans lequel ledit bras de support (8) comprend des douilles (16) configurées pour permettre le passage desdits câbles de l'espace intérieur défini par ledit bras de support (8) vers ledit espace intérieur (4) défini par ladite cabine (2) .

6. Véhicule de travail selon l'une quelconque des revendications 1 à 3, comprenant un élément de support fixé (20) porté par ledit bras de support (8) et/ou l'une desdites parois (3) et configuré pour porter des moyens de connexion électrique (21) connectés à une source d'énergie et/ou un signal dudit véhicule de travail (1) pour fournir de l'énergie et/ou un signal auxdits dispositifs électroniques (7).

7. Véhicule de travail selon l'une quelconque des revendications 1 à 6, dans lequel ledit élément de support (10) comprend une plaque de support (14) configurée pour permettre la connexion d'un dispositif électronique (7).

8. Véhicule de travail selon l'une quelconque des revendications 1 à 7, dans lequel ledit élément de support (10) comprend une première partie (10a) configurée pour coopérer avec un côté dudit bras de support (8) et une seconde partie (10b) configurée pour coopérer avec un côté opposé dudit bras de support (8), lesdites première et seconde parties (10a, 10b) étant reliées ensemble par une goupille (12), ledit élément de support (10) comprenant en outre des moyens de couplage (11) configurés pour éloigner lesdites première et seconde parties (10a, 10b) le long de ladite goupille (12) et pour serrer ensemble lesdites première et seconde parties (10a, 10b) audit bras de support, déplaçant celles-ci le long de ladite goupille (12) .

9. Véhicule de travail selon les revendications 7 et 8, dans lequel ladite plaque de support (14) est couplée à ladite goupille (12) par le biais d'un joint à rotule (15).
